# EUROPÄISCHE PATENTSCHRIFT

(11) **EP 2 106 386 B1**
(45) Veröffentlichungstag und Bekanntmachung des Hinweises auf die Patenterteilung: **14.03.2012**
(21) Anmeldenummer: 07726058.6
(22) Anmeldetag: 18.06.2007
(51) Int. Cl.: C02F 1/24, C02F 3/02

(54) **VERFAHREN UND VORRICHTUNG ZUR AEROBEN AUFBEREITUNG VON ABWASSER**
METHOD AND DEVICE FOR THE AEROBIC TREATMENT OF WASTE WATER
PROCÉDÉ ET DISPOSITIF DESTINÉS AU TRAITEMENT AÉROBIE DES EAUX USÉES

(30) Priorität: 20.12.2006 DE 102006060426
(43) Veröffentlichungstag der Anmeldung: 07.10.2009
(73) Patentinhaber: MERI Environmental Solutions GmbH, 81673 München (DE)
(72) Erfinder: TROUBOUNIS, George, 80331 München (DE); EFINGER, Dieter, 84036 Kumhausen (DE); GESSLER, Werner, 88213 Ravensburg-Schmalegg (DE); MENKE, Lucas, 81545 München (DE)
(74) Vertreter: Manitz, Finsterwald & Partner GbR
(86) Internationale Anmeldenummer: PCT/EP2007/005352
(87) Internationale Veröffentlichungsnummer: WO 2008/083723

(56) Entgegenhaltungen:
- EP-A- 1 097 908
- DE-A1-102004 047 010
- US-A- 4 369 111
- US-A1- 2002 162 795

## Beschreibung

Die vorliegende Erfindung betrifft ein Verfahren zur kontinuierlichen Reinigung von Abwasser, insbesondere zur kontinuierlichen Reinigung von Abwasser in der Papierindustrie, bei dem einem aeroben Reaktor Sauerstoff oder ein sauerstoffhaltiges Gas und zu reinigendes Abwasser zugeführt wird, das Abwasser in dem aeroben Reaktor mit aeroben Mikroorganismen kontaktiert wird, um in dem Abwasser enthaltene Verunreinigungen abzubauen, und das gereinigte Abwasser aus dem aeroben Reaktor abgeführt wird. Des weiteren betrifft die vorliegende Erfindung eine zur Durchführung des erfindungsgemäßen Verfahrens geeignete Vorrichtung.

Zur Abwasserreinigung sind eine Vielzahl von mechanischen, chemischen sowie biologischen Verfahren und entsprechende Reaktoren bekannt. Bei der biologischen Abwasserreinigung wird das zu reinigende Abwasser mit aeroben oder anaeroben Mikroorganismen kontaktiert, welche die in dem Abwasser enthaltenen organischen Verunreinigungen im Falle von aeroben Mikroorganismen überwiegend zu Kohlendioxid und Wasser und im Falle von anaeroben Mikroorganismen vorwiegend zu Kohlendioxid und Methan abbauen.

Für die aerobe Abwasserreinigung wird als Reaktor seit geraumer Zeit ein so genannter MBBR ("moving bed biofilm reactor" bzw. "Bewegtbettbiofilmreaktor") eingesetzt. Bei diesem Reaktor sind die aeroben Mikroorganismen auf einem Trägermaterial, das beispielsweise die Form eines Gerüstes aufweist, aufgebracht, welches während der Durchführung des Verfahrens durch das durch den Reaktor geführte Abwasser und durch die zwecks Sauerstoffzufuhr erfolgende Belüftung in Schwebe gehalten wird. Um das Trägermaterial mit den darauf wachsenden Mikroorganismen in dem Reaktor zu halten, wird das aus dem Reaktor abzuführende Wasser durch einen Filter geführt, welcher einen ausreichend kleinen Öffnungsdurchmesser aufweist, so dass das mit den Mikroorganismen versetzte Trägermaterial den Filter nicht passiert.

Ein wesentliches Problem bei der Reinigung von Abwasser in einem aeroben Reaktor stellt die Wasserhärte des Abwassers bzw. die in dem Abwasser enthaltenen Carbonate und Hydrogencarbonate dar, weil die in aeroben Reaktoren eingesetzten, mit Mikroorganismen versetzten Träger während des Betriebs des Reaktors aufgrund ihrer Struktur und Größe Kristallisationskeime für Kalkablagerungen darstellen. Derartige Kalkablagerungen auf den Trägern beeinträchtigen jedoch deren Funktion. Wenn sich nämlich Kalk auf den mit den Mikroorganismen versetzten Trägern ablagert, erhöht sich deren spezifische Gewicht, weswegen diese beim Betrieb des aeroben Reaktors nicht mehr in Schwebe gehalten werden sowie auf den Boden des Reaktors absinken und dort nicht mehr an dem Reinigungsprozess teilnehmen können. Auch die Stoffwechseltätigkeit der aeroben Mikroorganismen bewirkt eine Verschiebung des Kalk-Kohlensäure-Gleichgewichts durch die Erzeugung von unter anderem Hydrogencarbonationen (HCO₃⁻), was eine Kalkausfällung auf den Mikroorganismenpellets weiter begünstigt. Um dies zu vermeiden, muss die Wasserhärte des Abwassers verringert werden.

Aus der DE 199 18 695 A1 ist eine Vorrichtung zur aeroben Aufbereitung von Abwasser aus der Papierherstellung bekannt, welche eine Verwirbelungszone mit einer in diese Zone mündenden Abwasserzuführung und einer Sauerstoff-Zuführung zur Verwirbelung des Abwassers und eine Klärzone aufweist, wobei die Zonen über einen Durchtritt für das in der Verwirbelungszone behandelte Wasser miteinander verbunden sind und sich in der Klärzone Klarwasser und Feststoffe voneinander trennen und separat abgezogen werden. Beim Betrieb dieser Vorrichtung setzen sich die in dem Abwasser vorhandenen aeroben Mikroorganismen unter Verbrauch von Sauerstoff zu Biomasse und Kohlendioxid um, so dass sich während der Verwirbelung Kalk bildet, der als Niederschlag ausfällt. Gleichzeitig fallen auch kolloidal gelöste oder suspendierte organische Bestandteile aus. Um eine ausreichende Ausfällung der organischen und anorganischen Frachten zu erreichen, soll die Verweilzeit des zu reinigenden Abwassers in der Vorrichtung zwischen 3 und 10 Stunden betragen. Derartig lange Verweilzeiten bedingen jedoch einen geringen Durchsatz der Vorrichtung pro Zeit, so dass das damit betriebene Verfahren sehr aufwendig ist.

Aus der EP 1 097 908 A1 ist ein Verfahren zur Behandlung von Prozess-wasser bzw. Abwasser aus der Papierindustrie bekannt, bei dem das Wasser zunächst einer anaeroben Reinigungsstufe zugeführt wird, um danach einer aeroben Reinigungsstufe und nachfolgend einem Trennschritt unterworfen zu werden, wobei es sich bei dem Trennschritt um einen Druckentspannungsflotationsschritt handeln kann.

In der DE 10 2004 047 010 A1 wird ein Verfahren zur Reinigung von Wasser beschrieben, bei dem wenigstens ein Teilstrom des zulaufenden Wassers einem Druckentspannungsflotationsverfahren unterzogen wird, bei dem der Teilstrom des zulaufenden Wassers verdichtet wird, in dem Wasser eine vorgegebene Menge an Gas gelöst wird, der Wasserstrom entspannt wird und die unterschiedlichen Phasen des Wasserstroms getrennt werden, wobei dem Wasserstrom nach dem Verdichten in Abhängigkeit von vorgegebenen Betriebsparametern wenigstens ein erstes Additiv zudosiert wird. Das Druckentspannungsflotationsverfahren kann durchgeführt werden, nachdem das Wasser in einer Reinigungsstufe vorbehandelt wurde, wobei die Reinigungsstufe eine mechanische Reinigungsstufe, eine physikalisch Reinigungsstufe, eine anaerobe Reinigungsstufe oder eine aerobe Reinigungsstufe sein kann.

Aufgabe der vorliegenden Erfindung ist daher die Bereitstellung eines einfachen und kostengünstigen Verfahrens sowie einer entsprechenden Vorrichtung zur Reinigung von Abwasser, insbesondere zur Reinigung von Abwasser in der Papierindustrie, bei dem/in der die in dem Abwasser enthaltenen Verunreinigungen unter Vermeidung der vorgenannten Probleme effizient abgebaut werden können.

Erfindungsgemäß wird diese Aufgabe gelöst durch ein Verfahren gemäß Patentanspruch 1 und insbesondere durch ein Verfahren zur kontinuerlichen Reinigung von Abwasser, insbesondere zur kontinuierlichen Reinigung von Abwasser in der Papierindustrie, bei dem einem aeroben Reaktor Sauerstoff oder ein sauerstoffhaltiges Gas und zu reinigendes Abwasser zugeführt wird, das Abwasser in dem aeroben Reaktor mit aeroben Mikroorganismen kontaktiert wird, um in dem Abwasser enthaltene Verunreinigungen abzubauen, und das gereinigte Abwasser aus dem aeroben Reaktor abgeführt wird, wobei wenigstens ein Teil des Abwassers zwecks wenigstens teilweiser Enthärtung vor der Zuführung in den aeroben Reaktor einem Druckentspannungsflotationsschritt unterzogen wird, wobei das zu reinigende Abwasser vor der Zuführung in den aeroben Reaktor kontinuierlich einer Druckentspannungsflotationseinrichtung, in welcher der Druckentspannungsflotationsschritt durchgeführt wird, zugeführt und dort mit wenigstens einem Teil des kontinuierlich aus dem aeroben Reaktor abgeführten Abwassers vermischt wird und aus der Druckentspannungsflotationseinrichtung kontinuierlich wenigstens teilweise enthärtetes Abwasser abgeführt und direkt dem aeroben Reaktor zugeführt wird, wobei die Wasserhärte in dem Druckentspannungsflotationsschritt wenigstens um 40 % verringert wird, und wobei die Vorrichtung, in welcher das Verfahren durchgeführt wird, eine Schlammseparationseinrichtung umfasst, welche dem aeroben Reaktor nachgeschaltet ist und von der eine Schlammrückführleitung zu dem aeroben Reaktor führt.

Indem das zu reinigende Abwasser entweder vor der Zuführung in den aeroben Reaktor einem Druckentspannungsflotationsschritt unterzogen wird, kann die Wasserhärte des Abwassers durch Ausfällen von Kalk verringert werden, weswegen in dem aeroben Reaktor störende Kalkausfällung zuverlässig verhindert werden kann. Ein weiterer besonderer Vorteil des erfindungsgemäßen Verfahrens besteht darin, dass der Druckentspannungsflotationsschritt zumindest teilweise in einer Mikroflotationseinrichtung, welche bei den in dem Stand der Technik bekannten, einen aeroben Reaktor umfassenden Vorrichtungen zur Abwasserreinigung häufig zur Separation von partikulärem Material vorgesehen ist, durchgeführt werden kann, so dass zur Durchführung des erfindungsgemäßen Verfahrens nur geringe Modifikationen an bereits bestehenden Anlagen notwendig sind. Ferner kann mit dem Druckentspannungsflotationsschritt eine Enthärtung des Abwassers schnell und effizient erreicht werden, so dass die entsprechende Vorrichtung mit einem hohen Durchsatz von Abwasser pro Zeit betrieben werden kann.

Unter zumindest teilweiser Enthärtung wird im Sinne der vorliegenden Erfindung die Verringerung der Wasserhärte verstanden.

Unter Druckentspannungsflotation wird im Sinne der vorliegenden Erfindung ein Trennverfahren verstanden, bei dem ein unter Druck im Wasser gelöstes Gas bei einer nachfolgenden Druckverminderung (Entspannung) ausgast und sich das ausgegaste Gas beim Aufstieg an schwebende Feststoffpartikel anlagert, so dass deren Flotation ermöglicht wird.

Bei dem erfindungsgemäß durchgeführten Druckentspannungsflotationsschritt wird das Abwasser vorzugsweise auf einen neutralen oder alkalischen pH-Wert eingestellt, mit Gas versetzt und mit Druck beaufschlagt, bevor das so behandelte Abwasser einem verringertem Druck ausgesetzt wird. Während durch die Einstellung eines neutralen oder alkalischen pH-Wertes eine Ausfällung von Kalk begünstigt wird, bewirkt die anschlie-βende Zugabe von Druckgas, Beaufschlagung mit Druck und nachfolgende Aussetzung gegenüber einem im Vergleich zu dem beaufschlagten Druck verminderten Druck bzw. Entspannung die Ausperlung von kleinen Gasblasen in der Abwassermischung, wobei die einzelnen Gasblasen durch die Mischung nach oben strömen und dabei die ausgefällten Kalkflocken mitreißen, die so leicht von dem Abwasser abgetrennt werden können.

Um eine effiziente Kalkausfällung bei dem Druckentspannungsflotationsschritt zu erreichen, wird in Weiterbildung des Erfindungsgedankens vorgeschlagen, das Abwasser auf einen pH-Wert zwischen 7 und 10, bevorzugt zwischen 7 und 9 und besonders bevorzugt zwischen 7,5 und 8,5 einzustellen. Geeignete pH-Einstellmittel zur Einstellung des pH-Wertes in die vorgenannten Bereiche schließen beispielsweise Natronlauge (NaOH), Kalilauge (KOH) und Calciumhydroxid (Ca(OH)₂) ein. Selbstverständlich kann die Einstellung des pH-Wertes auch auf alle anderen dem Fachmann bekannten Arten erfolgen, beispielsweise dadurch, dass eine chemische Verbindung, wie Harnstoff, katalytisch, z.B. enzymatisch, zu einer basischen Verbindung, wie Ammoniak, umgesetzt wird.

Um die Kalkausfällung zu unterstützen und die bei dem Druckentspannungsflotationsschritt gebildeten Kalkflocken besonders leicht aus dem Abwasser abzutrennen zu können, hat es sich als vorteilhaft erwiesen, dem Abwasser vor oder während dem Druckentspannungsflotationsschritt wenigstens ein Fällungsmittel und/oder wenigstens ein Flockungshilfsmittel zuzusetzen. Während das Fällungsmittel die Kalkausfällung erleichtert, bewirkt das Flockungshilfsmittel die Bildung von Kalkflocken mit einer für eine leichte Abtrennung derselben gewünschten Struktur und Größe.

Während sich als Fällungsmittel Polyaluminiumchlorid bewährt hat, ist ein bevorzugtes Beispiel für ein geeignetes Flockungshilfsmittel Polyacrylamid.

Erfindungsgemäß wird das Abwasser vor der Zuführung in den, aeroben Reaktor einer Druckentspannungsflotationseinrichtung zugeführt weil die Druckentspannungsflotationseinzichtung dann mit einer bei bestehenden Anlagen zur Separation von partikulärem Material vorhandenen Mikroflotationseinrichtung kombiniert werden kann.

Vorzugsweise wird bei dem erfindungsgemäßen Verfahren die Temperatur des Abwassers, insbesondere die des dem aeroben Reaktor zugeführten Abwassers, geregelt und/oder überwacht, um die für die in dem aeroben Reaktor enthaltenen Mikroorganismen optimale Temperatur einzustellen.

Erfindungsgemäß ist es vorgesehen, das zu reinigende Abwasser kontinuierlich der Druckentspannungsflotationseinrichtung, in dem der Druckentspannungsflotationsschritt stattfindet, zuzuführen und dort mit wenigstens einem Teil des kontinuierlich aus dem aeroben Reaktor abgeführten Abwassers zu vermischen und aus der Druckentspannungsflotationseinrichtung kontinuierlich wenigstens teilweise enthärtetes Abwasser abzuführen, welches vollständig oder teilweise in den aeroben Reaktor geführt wird.

Es ist möglich, das zu reinigende Abwasser kontinuierlich einer Druckentspannungsflotationseinrichtung, in dem der Druckentspannungsflotationsschritt stattfindet, zuzuführen und dort mit wenigstens einem Teil des kontinuierlich aus dem aeroben Reaktor abgeführten Abwassers zu vermischen und aus der Druckentspannungsflotationseinrichtung kontinuierlich wenigstens teilweise enthärtetes Abwasser abzuführen, wobei das wenigstens teilweise enthärtete Abwasser in zwei Teilströme aufgetrennt wird und ein Teilstrom in den aeroben Reaktor geführt wird, wohingegen der andere Teilstrom aus der Vorrichtung abgeführt und in einem Produktionsprozess wieder eingesetzt wird.

Vorzugsweise erfolgt die Verfahrensführung derart, dass die Wasserhärte in dem Druckentspannungsflotationsschritt wenigstens um 40 % verringert wird.

Bei dem erfindungsgemäßen Verfahren können alle dem Fachmann bekannten Arten von aeroben Reaktoren eingesetzt werden, wobei lediglich beispielsweise MBBR oder Belebtschlammbecken genannt sind. Insbesondere kann der einzusetzende aerobe Reaktor alle der bekannten Belüftungssysteme zur Zuführung des für die aeroben Mikroorganismen notwendigen Sauerstoffs bzw. sauerstoffhaltigen Gases enthalten, wie beispielsweise Strahlbelüfter, Volumenbelüfter, Oberflächenbelüfter und dergleichen. Besonders bevorzugt ist der aerobe Reaktor als MBBR ausgestaltet. Die Mikroorganismen können in dem aeroben Reaktor entweder durch geeignete Filter, welche vor der Abfuhrleitung für das gereinigte Wasser positioniert sind, zurückbehalten werden oder nach dem Reaktor in einer Separationseinrichtung von dem Wasser abgetrennt und wieder in den Reaktor zurückgeführt werden.

Neben der erfindungsgemäßen Behandlung des Abwassers in dem aeroben Reaktor und dem Druckentspannungsffotationsschritt kann das erfindungsgemäße Verfahren den Einsatz weiterer biologischer Behandlungsstufen, wie etwa den eines oder mehrerer weiterer aerober Reaktoren und/oder den eines oder mehrerer anaerober Reaktoren, umfassen. Vorzugsweise beträgt die Gesamtzahl der aeroben und ggf. anaeroben Reaktoren 2 bis 6.

Ein weiterer Gegenstand der vorliegenden Erfindung ist eine Vorrichtung kontinuierlichen zur Reinigung von Abwasser, welche insbesondere zur Durchführung des zuvor beschriebenen, erfindungsgemäßen Verfahrens geeignet ist.

Erfindungsgemäß umfasst die Vorrichtung wenigstens einen Reaktor zur aeroben Reinigung von Abwasser mit wenigstens einer Zufuhrleitung zur Zuführung von zu reinigendem Abwasser in den Reaktor, wenigstens einer Gaszufuhrleitung zur Zuführung von Sauerstoff oder zur Zuführung eines sauerstoffhaltigen Gases in den Reaktor sowie wenigstens einer Abfuhrleitung zur Abführung von gereinigtem Abwasser aus dem Reaktor, wobei die Vorrichtung desweiteren eine, einen Druckentspannungsflotationsreaktor aufweisende Druckentspannungsflotationseinrichtung umfasst, welche mit der wenigstens einen Abfuhrleitung des aeroben Reaktors über eine Druckentspannungsflotationszufuhrleitung derart verbunden ist, dass wenigstens ein Teilstrom des aus dem aeroben Reaktor über die Abfuhrleitung abgezogenen, gereinigten Abwassers in den Druckentspannungsflotationsreaktor geleitet werden kann, wobei die Druckentspannungsflotationseinrichtung stromaufwärts des aeroben Reaktors angeordnet ist, die Druckentspannungsflotationseinrichtung wenigstens eine Zufuhrleitung für ein pH-Einstellmittel aufweist und die Druckentspannungsflotationseinrichtung ferner eine von dem Druckentspannungsflotationsreaktor direkt zu dem aeroben Reaktor führende Leitung umfasst, und wobei die Vorrichtung eine Schlammseparationseinrichtung umfasst, die dem aeroben Reaktor nachgeschaltet ist, und von der eine Schlammrückführleitung zu dem aeroben Reaktor führt.

Ferner ist es bevorzugt, dass die Druckentspannungsflotationseinrichtung wenigstens eine Zufuhrleitung für ein Fällungsmittel und/oder ein Flockungshilfsmittel aufweist.

In Weiterbildung des Erfindungsgedankens wird vorgeschlagen, in der Druckentspannungsflotationseinrichtung wenigstens eine Zufuhrleitung für ein Druckgas vorzusehen.

Gemäß einer weiteren bevorzugten Ausführungsform der vorliegenden Erfindung weist die Druckentspannungsflotationseinrichtung eine Gaslösungseinrichtung auf, welche mit dem Druckentspannungsflotationsreaktor über eine Leitung verbunden ist und in welche die Druckgaszufuhrleitung mündet.

Zudem hat es sich als zweckmäßig erwiesen, dass die Abwasserzufuhrleitung in eine Mischeinheit mündet und von dort über eine Zufuhrleitung in den Druckentspannungsflotationsreaktor mündet, wobei die Mischeinheit vorzugsweise eine Zufuhrleitung für pH-Einstellmittel und/oder eine Zufuhrleitung für Fällungs- und/oder Flockungshilfsmittel aufweist.

Vorzugsweise mündet die Rückfuhrleitung der Druckentspannungsflotationseinrichtung direkt in den Zulaufbereich des aeroben Reaktors.

Gemäß einer weiteren bevorzugten Ausführungsform der vorliegenden Erfindung ist es vorgesehen, dass die Vorrichtung eine Abwasserzufuhrleitung aufweist, welche stromaufwärts des aeroben Reaktors angeordnet ist und flüssigkeitsleitend mit der Zufuhrleitung des aeroben Reaktors verbunden ist.

Um eine insbesondere für die in dem aeroben Reaktor enthaltenen Mikroorganismen optimale Temperatur einzustellen, weist die Vorrichtung vorzugsweise eine Temperatur-Einstelleinrichtung auf, welche vorzugsweise in der Rückführleitung angeordnet ist. Bevorzugt handelt es sich bei der Temperatur-Einstelleinrichtung um einen Wärmeaustauscher oder um eine Kühleinrichtung, beispielsweise einen Kühlturm.

Vorzugsweise weist der aerobe Reaktor einen Reaktorbehälter, in dessen unterem Bereich die Zufuhrleitung zu dem aeroben Reaktor vorgesehen ist, wenigstens eine Belüftungseinrichtung zum Einbringen von Sauerstoff oder einem sauerstoffhaltigen Gas, wenigstens einen Zulaufverteiler zur Vermischung des dem Reaktor zugeführten Abwassers mit dem in dem Reaktor befindlichen Medium und wenigstens einen am oberen Reaktorbehälter angeordneten Überlauf zum Abführen von gereinigtem Wasser zu der Reaktorabfuhrleitung auf.

Gemäß einer weiteren bevorzugten Ausführungsform der vorliegenden Erfindung mündet die Gaszufuhrleitung des aeroben Reaktors in eine Belüftungseinrichtung, welche vorzugsweise als eine Strahlbelüftung, als eine Volumenbelüftung oder als eine Oberflächenbelüftung ausgestaltet ist.

In Weiterbildung des Erfindungsgedankens wird vorgeschlagen, dass die Vorrichtung neben dem aeroben Reaktor einen oder mehrere weitere(n) aerobe Reaktor(en) und/oder einen oder mehrere anaerobe Reaktor(en) umfasst.

Erfindungsgemäß umfasst die Vorrichtung eine Schlammseparationseinrichtung, die dem aeroben Reaktor nachgeschaltet ist, und von der vorzugsweise eine Schlammrückführleitung zu dem aeroben Reaktor führt

Nachfolgend wird die vorliegende Erfindung rein beispielhaft anhand vorteilhafter Ausführungsformen und unter Bezugnahme auf die beigefügten Zeichnungen beschrieben.

Dabei zeigen:
- Fig. 1: eine schematische Ansicht einer Vorrichtung zur Reinigung von Abwasser in der Papierindustrie gemäß dem Stand der Technik,
- Fig. 2: eine schematische Ansicht einer Vorrichtung zur Reinigung von Abwasser in der Papierindustrie gemäß eines ersten Ausführungsbeispiels der vorliegenden Erfindung,
- Fig. 3: eine schematische Ansicht einer Vorrichtung zur Reinigung von Abwasser in der Papierindustrie gemäß eines zweiten Ausführungsbeispiels der vorliegenden Erfindung,
- Fig. 4: eine schematische Ansicht einer Vorrichtung zur Reinigung von Abwasser in der Papierindustrie
- Fig. 5: eine schematische Ansicht einer Vorrichtung zur Reinigung von Abwasser in der Papierindustrie
- Fig. 6: eine schematische Ansicht einer Anlage zur Reinigung von Abwasser in der Papierindustrie gemäß eines fünften Ausführungsbeispiels der vorliegenden Erfindung,
- Fig. 7: eine schematische Ansicht einer Anlage zur Reinigung von Abwasser in der Papierindustrie gemäß eines sechsten Ausführungsbeispiels der vorliegenden Erfindung und
- Fig. 8: eine schematische Ansicht einer Anlage zur Reinigung von Abwasser in der Papierindustrie gemäß eines siebten Ausführungsbeispiels der vorliegenden Erfindung.

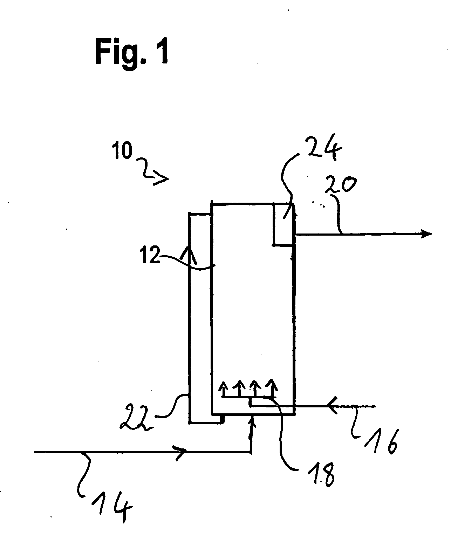

Die in der Fig. 1 gezeigte Vorrichtung 10 zur Reinigung von Abwasser nach dem Stand der Technik umfasst einen aeroben Reaktor 12, der eine Abwasserzufuhrleitung 14, eine Gaszufuhrleitung 16 zur Zuführung von Sauerstoff oder sauerstoffhaltigem Gas, wie beispielsweise Luft, welche in eine Belüftungseinrichtung 18 mündet, sowie eine Abwasserabfuhrleitung 20 aufweist. Ferner weist der aerobe Reaktor 12 eine Rezirkulationsleitung 22 auf, durch welche das in dem aeroben Reaktor 12 enthaltene Medium über einen Mammutpumpeneffekt umgewälzt wird. Die Rezirkulationsleitung 22 kann, wie in der Fig. 1 dargestellt, extern, d.h. außerhalb des Reaktors 12, oder intern, d.h. in dem aeroben Reaktor 12 verlaufend (nicht dargestellt), angeordnet sein. Schließlich weist der aerobe Reaktor 12 vor der Mündung der Abwasserabfuhrleitung 20 einen Grobfilter 24 auf, durch den aus dem abzuführenden Abwasser Feststoffe herausgefiltert werden.

Beim Betrieb der Vorrichtung 10 wird das zu reinigende Abwasser, welches beispielsweise aus einer Papierfabrik stammt, über die Abwasserzufuhrleitung 14 kontinuierlich in den aeroben Reaktor 12 eingeleitet. Gleichzeitig wird dem aeroben Reaktor 12 über die Gaszufuhrleitung 16 kontinuierlich Luft zugeführt, welche in den Reaktor 12 über die an der Mündung der Gaszufuhrleitung 16 angeordnete Belüftungseinrichtung 18 eingeleitet und verteilt wird und sich mit dem zu reinigenden Abwasser vermischt. Das belüftete, zu reinigende Abwasser wird dann durch den Reaktor nach oben geführt, wo dies in Kontakt mit den in dem Reaktor 12 in Schwebe gehaltenen, auf Trägern vorgesehenen aeroben Mikroorganismen (nicht dargestellt) tritt, wobei die aeroben Mikroorganismen die in dem Abwasser enthaltenen organischen Verunreinigungen zumindest teilweise abbauen. Das in dem Reaktor 12 enthaltene Medium wird über die Rezirkulationsleitung 22 kontinuierlich umgewälzt. Das durch die aeroben Mikroorganismen gereinigte Abwasser steigt in dem Reaktor 12 weiter nach oben und passiert den Grobfilter 24, in dem die mitgerissenen, mit Mikroorganismen versetzten Träger zurückgehalten werden. Nach dem Grobfilter 24 wird das Wasser aus dem Reaktor 12 über die Abwasserabfuhrleitung 20 abgeführt. Das abgeführte Wasser kann einer weiteren biologischen Behandlungsstufe (nicht dargestellt) oder einer Nachklärung (nicht dargestellt) zugeführt werden.

Da die mit den Mikroorganismen versetzten Träger als Kristallisationskeime fungieren, bildet sich beim Betrieb des Reaktors 12 aus den in dem Abwasser enthaltenen Hydrogencarbonat- bzw. Carbonationen Kalk, der sich an den Trägern ablagert. Ferner erfolgt durch die Luftzufuhr eine Entstrippung von Kohlendioxid, welche zu der Kalkpräzipitation beiträgt. Zudem erfolgt aufgrund der Stoffwechseltätigkeit der aeroben Mikroorganismen in dem aeroben Reaktor 12 eine Verschiebung des Kalk-Kohlensäure-Gleichgewichts, woraus ebenfalls eine Kalkausfällung auf den als Kristallisationskeimen wirkenden Trägern resultiert, was deren spezifische Dichte erhöht. Aufgrund der Kalkausfällung auf den Trägern setzt sich ein Teil der Träger auf dem Boden des Reaktors ab, so dass dieser Teil nicht mehr an der Reinigung teilnimmt, was die Effizienz des aeroben Reaktors 12 negativ beeinträchtigt.

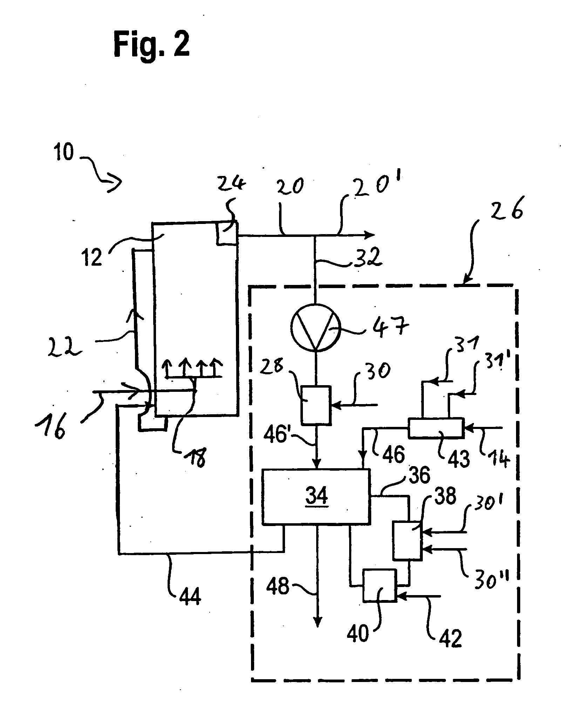

Im Unterschied zu der in der Fig. 1 gezeigten Vorrichtung 10 nach dem Stand der Technik weist die in der Fig. 2 dargestellte Vorrichtung 10 zur Reinigung von Abwasser gemäß der vorliegenden Erfindung neben dem aeroben Reaktor 12 eine in der Fig. 2 gestrichelt eingerahmt dargestellte Druckentspannungsflotationseinrichtung 26 auf. Zudem wird das zu reinigende Abwasser der Vorrichtung 10 nicht über eine unmittelbar in den aeroben Reaktor 12 führende, sondern mittelbar über eine in die Druckentspannungsflotationseinrichtung 26 führende Abwasserzufuhrleitung 14 zugeführt.

Die Druckentspannungsflotationseinrichtung 26 umfasst eine pH-Wert-Einstelleinrichtung 28, welcher über eine Zulaufleitung 30 eine zur Einstellung des pH-Wertes des der Druckentspannungsflotationseinrichtung 26 aus dem aeroben Reaktor 12 über eine Teilstromleitung 32 zugeführten Abwassers auf einen gewünschten Wert geeignete Substanz, beispielsweise Natronlauge, zugeführt werden kann. Zudem umfasst die Druckentspannungsflotationseinrichtung 26 einen Druckentspannungsflotationsreaktor 34, in dem mittels Druckentspannungsflotation Kalk aus dem Abwasser abgetrennt wird. Zu diesem Zweck weist der Druckentspannungsflotationsreaktor 34 eine Kreislaufleitung 36 auf, die mit einer Zumischeinheit 38 und mit einem Gaslösungsreaktor 40 verbunden ist. Über die Zulaufleitungen 30', 30" können der Zumischeinheit 38 Fällungsmittel und/oder Flockungshilfsmittel zugegeben werden, während der Gaslösungsreaktor 40 mit einer Druckgaszufuhrleitung 42 ausgestattet ist.

Die Abwasserzufuhrleitung 14 führt in eine Mischeinheit 43, in die ebenfalls Zulaufleitungen 31, 31' einmünden, über welche dem zu reinigenden Abwasser in der Mischeinheit 43 pH-Einstellmittel, Fällungsmittel und/oder Flockungshilfsmittel zugesetzt werden können. Von der Mischeinheit 43 gelangt das der Vorrichtung 10 zugeführte, zu reinigende Abwasser über die Zulaufleitung 46 in den Druckentspannungsflotationsreaktor 34.

In dem Ablaufbereich des Druckentspannungsflotationsreaktors 34 ist eine Rückfuhrleitung 44, in der optional eine Kühleinrichtung (nicht dargestellt) vorgesehen sein kann, vorgesehen, welche in den Zulaufbereich des aeroben Reaktors 12 führt.

Beim Betrieb der in der Fig. 2 gezeigten Vorrichtung 10 wird das zu reinigende Abwasser kontinuierlich über die Abwasserzufuhrleitung 14 in die Mischeinheit 43 geleitet, in der dieses mit, der Mischeinheit 43 über die Zulaufleitungen 31, 31' zugeführtem pH-Einstellmittel, Fällungsmittel und Flockungshilfsmittel versetzt wird, so dass für eine Kalkausfällung aus dem Abwasser geeignete Bedingungen eingestellt werden, wobei der eingestellte pH-Wert vorzugsweise zwischen 7,5 und 8,5 beträgt. Von der Mischeinheit 43 wird das so vorbehandelte Abwasser über die Zulaufleitung 46 kontinuierlich in den Druckentspannungsflotationsreaktor 34 geleitet. Zudem wird ein Teilstrom des aus dem aeroben Reaktor 12 über die Leitung 20 kontinuierlich abgezogenen, gereinigten Abwassers über die Teilstromleitung 32 über eine Pumpe 47 in die pH-Wert-Einstelleinrichtung 28 geführt, in der das zu Abwasser mit dem der pH-Wert-Einstelleinrichtung 28 über die Zulaufleitung 30 zugeführten pH-Wert-Einstellmittel vermischt und auf für eine Kalkausfällung geeignete Bedingungen eingestellt wird. Vorzugsweise beträgt der Anteil des der pH-Wert-Einstelleinrichtung 28 über die Teilstromleitung 32 zugeführten Teilstroms, bezogen auf den dem aeroben Reaktor 12 über die Abfuhrleitung 20 entnommenen Gesamtstrom, 5 bis 80 % und besonders bevorzugt 30 bis 50 %. Ferner ist es bevorzugt, dass der pH-Wert dieses Teilstroms durch den Zusatz des pH-Wert-Einstellmittels, vorzugsweise Natronlauge, auf 7,5 bis 8,5 eingestellt wird. Beispielsweise kann die Konzentration an Natronlauge nach der Zugabe des pH-Wert-Einstellmittels, bezogen auf eine 50 gew.-%-ige Lösung, 0,2 bis 0,6 1/m³ betragen. Anschließend wird die so erzeugte Mischung über eine Druckentspannungsflotationszufuhrleitung 46' in den Druckentspannungsflotationsreaktor 34 geleitet.

Aus dem Druckentspannungsflotationsreaktor 34 wird über die Kreislaufleitung 36 kontinuierlich ein Teil der in dem Druckentspannungsflotationsreaktor 34 befindlichen Flüssigkeit entnommen und dieser Teilstrom durch die Zumischeinheit 38 und den Gaslösungsreaktor 40 geleitet, bevor der Teilstrom wieder in den Druckentspannungsflotationsreaktor 34 zurückgeführt wird. In der Zumischeinheit 38 werden dem Teilstrom über die Zulaufleitungen 30', 30" Fällungsmittel und Flockungshilfsmittel zugesetzt, welche die Ausfällung von Kalk und die Bildung für eine Abtrennung aus dem Abwasser geeignet dimensionierter Kalkflocken unterstützen. Als Fällungsmittel kann beispielsweise Polyaluminiumchlorid eingesetzt werden, wohingegen Polyacrylamid ein Beispiel für ein geeignetes Flockungshilfsmittel ist. In dem stromabwärts der Zumischeinheit 38 vorgesehenen Gaslösungsreaktor 40 wird dem Teilstrom zwecks Vorbereitung auf die nachfolgende Druckgasentspannungsflotation über die Druckgaszufuhrleitung 42 ein Druckgas, beispielsweise Luft oder ein anderes sauerstoffhaltiges Gas oder auch ein sauerstofffreies Gas, zugesetzt und der mit dem Druckgas vermischte Teilstrom mit Druck beaufschlagt, bevor der so behandelte Teilstrom in den Druckentspannungsflotationsreaktor 34 zurückgeführt wird. In dem Druckentspannungsflotationsreaktor 34 expandiert die mit Druck beaufschlagte und mit Gas versetzte Mischung schlagartig, so dass das in dem Wasser gelöst vorliegende Gas ausperlt und in Form von Gasblasen in dem Druckentspannungsflotationsreaktor 34 nach oben aufsteigt. Gleichzeitig bildet der in dem Wasser befindliche Kalk aufgrund der vorliegenden Fällungs- und Flockungshilfsmittel Flocken geeigneter Größe und Struktur, so dass diese durch die nach oben steigenden Gasblasen an die Wasseroberfläche in dem Druckentspannungsflotationsreaktor 34 getrieben werden. Während der sich so bildende Kalkschlamm über die Schlammabfuhrleitung 48 aus dem Druckentspannungsflotationsreaktor 34 entfernt wird, wird das gereinigte und von Kalk befreite, d.h. das enthärtete, Wasser über die Rückfuhrleitung 44 in den Zulaufbereich des aeroben Reaktors 12 geführt. Über die Abwasserabfuhrleitung 20' wird aus der Vorrichtung 10 der Teil des Abwasserstroms 20, der nicht über die Teilstromleitung 32 in die Druckentspannungsflotationseinrichtung 26 geleitet wird, abgezogen.

Aufgrund der Ausfällung und Abtrennung des Kalks aus dem der Vorrichtung 10 über die Abwasserzufuhrleitung 14 zugeführten Abwasser und aufgrund der Ausfällung und Abtrennung des Kalks aus dem der Druckentspannungsflotationseinrichtung 26 zugeführten, aus dem aeroben Reaktor 12 stammenden Teilstroms in der Druckentspannungsflotationseinrichtung 26 wird die Wasserhärte des in den aeroben Reaktor 12 über die Rückfuhrleitung 44 zugeführten Abwassers auf einen geeignet niedrigen Wert verringert, so dass in dem aeroben Reaktor 12 keine die Funktion der Mikroorganismen störenden Mengen an Kalk abgeschieden werden, so dass die Reinigungseffizienz des aeroben Reaktors 12 optimiert wird.

Indem das zu reinigenden, der Vorrichtung 10 über die Abwasserzufuhrleitung 14 zugeführte Abwasser zunächst in die Druckentspannungsflotationseinrichtung 26 geleitet wird, bevor dieses in den stromabwärts der Druckentspannungsflotationseinrichtung 26 gelegenen aeroben Reaktor 12 geführt wird, kann eine regelmäßig dem aeroben Reaktor 12 in den aus dem Stand der Technik bekannten Vorrichtungen vorgeschaltete, als Einrichtung zur Separation von partikulärem Material fungierende Mikroflotationseinrichtung mit dem Druckentspannungsflotationsreaktor 34 kombiniert werden. Dadurch können die Kosten für die Vorrichtung 10 erheblich verringert werden.

In der in der Fig. 2 gezeigten Vorrichtung sind zwei Zulaufleitungen 30, 31 für pH-Einstellmittel vorgesehen, von denen die Zulaufleitung 30 über die pH-Wert-Einstelleinrichtung 28 in den über die Teilstromleitung 32 zugeführten Teilstrom aus dem aeroben Reaktor 12 und die Zulaufleitung 31 über die Mischeinheit 43 in das über die Abwasserzufuhrleitung 14 zugeführte zu reinigende Abwasser mündet. Anstatt dessen kann auch nur eine der Zulaufleitungen 30, 31 vorgesehen sein oder anstelle beider Leitungen eine direkt in den Druckentspannungsflotationsreaktor 34 führende Zulaufleitung für pH-Einstellmittel (nicht dargestellt) vorgesehen sein. Gleichermaßen kann auf die zu der Mischeinheit 43 führende Zulaufleitung 31' für Fällungs- und/oder Flockungshilfsmittel verzichtet werden, so dass die Konzentration an Fällungs- und/oder Flockungshilfsmittel allein über die Zulaufleitungen 30', 30" erfolgt.

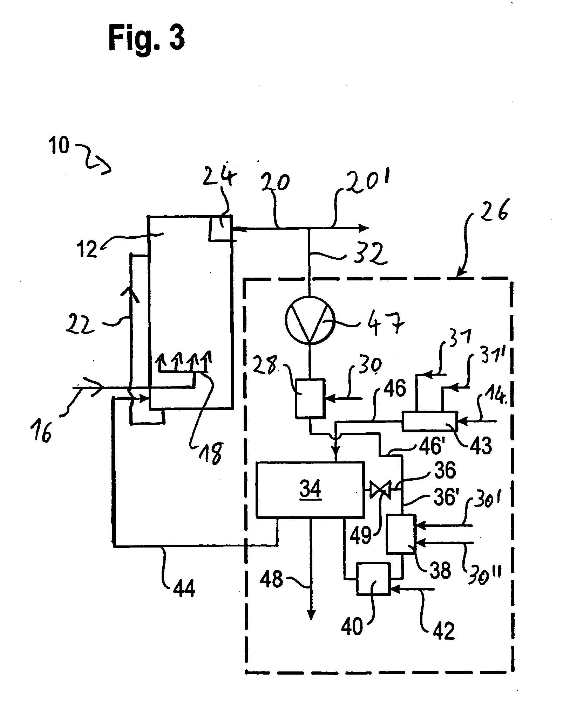

Die in der Fig. 3 dargestellte Vorrichtung 10 gemäß eines zweiten Ausführungsbeispiels der vorliegenden Erfindung unterscheidet sich von der in der Fig. 2 gezeigten dadurch, dass der der Druckentspannungsflotationseinrichtung 26 über die Teilstromleitung 32 aus dem aeroben Reaktor 12 zugeführte Teilstrom nach der pH-Wert-Einstelleinrichtung 28 nicht direkt in den Druckentspannungsflotationsreaktor 34, sondern zunächst in die zu der Zumischeinheit 38 führende Leitung 36' geführt wird. Zudem ist eine von dem Druckentspannungsflotationsreaktor 34 zu der Leitung 36' führende Kreislaufleitung 36 vorgesehen, welche mit einem Ventil 49 versehen ist, über den die Kreislaufleitung 36 geöffnet oder geschlossen werden kann. Alternativ zu der in Fig. 3 gezeigten Ausführungsform kann der der Druckentspannungsflotationseinrichtung 26 über die Teilstromleitung 32 aus dem aeroben Reaktor 12 zugeführte Teilstrom nach der pH-Wert-Einstelleinrichtung 28 auch über einen Saugstutzen einer Druckpumpe zu dem Gaslösungsreaktor 40 zugeführt werden. Der über die Abwasserabfuhrleitung 20' aus der Vorrichtung 10 abgeführte Wasserstrom kann einer weiteren aeroben biologischen Behandlungsstufe (nicht dargestellt) oder einer Nachklärung (nicht dargestellt) zugeführt werden. Die in der Fig. 3 dargestellte Ausführungsform gemäß der vorliegenden Erfindung ist insbesondere für die Reinigung von Abwasser oder Prozesswasser aus der Papierindustrie geeignet.

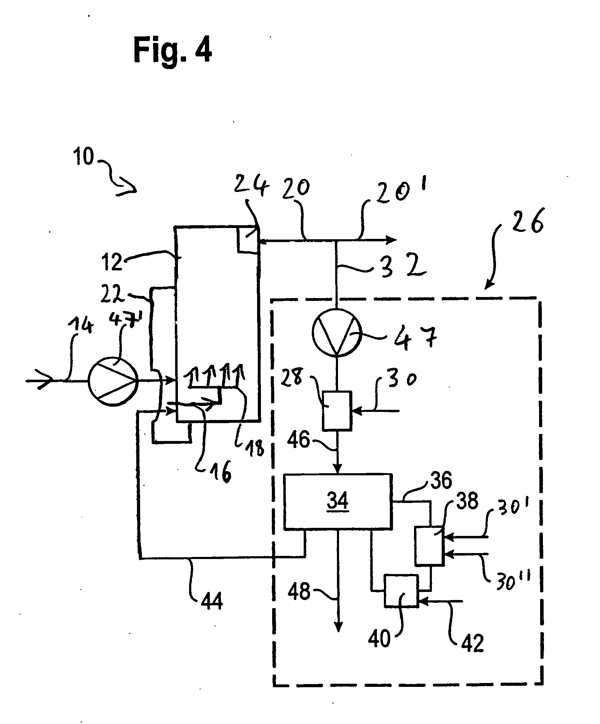

Im Unterschied zu den in den Fig. 2 und 3 gezeigten Vorrichtungen 10 ist die Abwasserzufuhrleitung 14 bei der in der Fig. 4 dargestellten Vorrichtung 10 nicht stromabwärts, sondern stromaufwärts des aeroben Reaktors 12 vorgesehen und mündet über eine Pumpe 47' direkt in den aeroben Reaktors 12. Beim Betrieb dieser Vorrichtung 10 wird demnach das zu reinigende Abwasser in den aeroben Reaktor 12 eingeleitet, in dem die in dem Abwasser enthaltenden organischen Verunreinigungen durch die Wirkung von aeroben Mikroorganismen abgebaut werden. Daraufhin wird das gereinigte Abwasser über die Abfuhrleitung 20 aus dem aeroben Reaktor 12 abgezogen und in zwei Teilströme aufgetrennt, von denen der eine Teilstrom über die Teilstromleitung 20' aus der Vorrichtung 10 abgezogen wird, wohingegen der andere Teilstrom über die Teilstromleitung 32, über die pH-Wert-Einstelleinrichtung 28 und über die Druckentspannungsflotationszufuhrleitung 46 in den Druckentspannungsflotationsreaktor 34 geführt wird, wo aus dem Abwasser Kalk ausgefällt und von dem Abwasser abgetrennt wird. Abschließend wird das enthärtete und gereinigte Abwasser über die Rückfuhrleitung 44 in den aeroben Reaktor 12 zurückgeleitet. Dadurch wird der Kalkgehalt des in den aeroben Reaktor 12 strömenden Wassers um 30 bis 60 % verringert, was die Bildung von Kalkablagerungen im Inneren des aeroben Reaktors 12 verhindert oder zumindest in einem ausreichenden Maß verringert. Durch die Einstellung des Enthärtungsgrades in dem Druckentspannungsflotationsreaktor 34 kann die Kalkbildung in dem aeroben Reaktor 12 gesteuert werden.

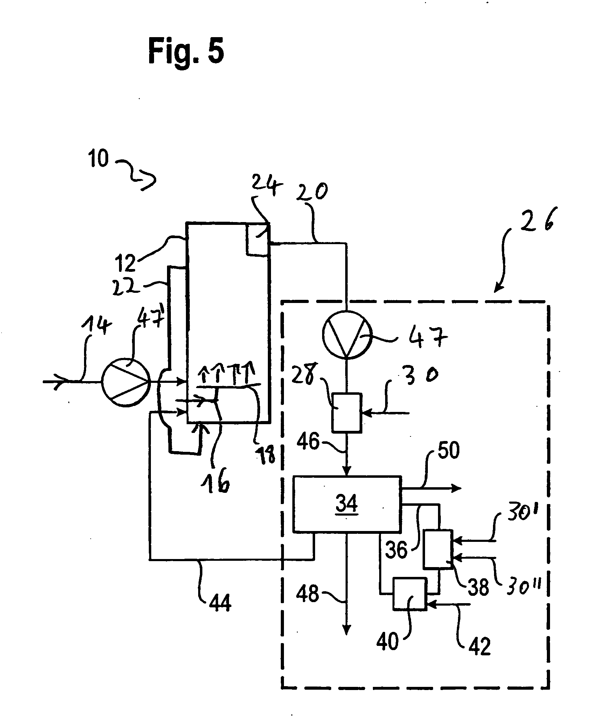

Die in der Fig. 5 dargestellte Vorrichtung 10 unterscheidet sich von der in der Fig. 4 gezeigten dadurch, dass der aus dem aeroben Reaktor 12 über die Abfuhrleitung 20 abgezogene Wasserstrom vollständig über die Druckentspannungsflotationszufuhrleitung 46 in den Druckentspannungsflotationsreaktor 34 eingeführt wird, der Wasserstrom 20 demnach nicht in Teilströme aufgetrennt wird. Im weiteren Unterschied zu der in der Fig. 4 gezeigten, ist in der in der Fig. 5 dargestellten Vorrichtung 10 an dem Druckentspannungsflotationsreaktor 34 eine Wasserabfuhrleitung 50 vorgesehen, über die ein Teil des über die Kreislaufleitung 36 rezirkulierten Flüssigkeitsstroms aus der Vorrichtung 10 abgezogen wird, um diesen zu entsorgen oder weiter zu verwenden. Diese Verfahrensvariante ist insbesondere dann vorteilhaft, wenn in der Zumischeinheit 38 ein sauerstoffhaltiges Gas, vorzugsweise Luft eingesetzt wird, weil dadurch in dem Druckentspannungsflotationsreaktor 34 gleichzeitig eine so genannte "flash Oxidation" des Rests des organischen Materials stattfindet.

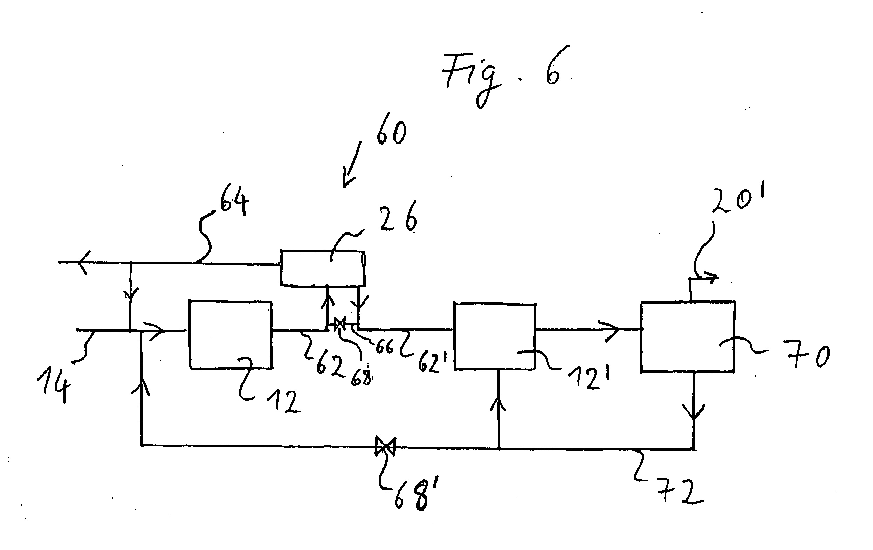

In der Fig. 6 ist eine Anlage 60 zur Reinigung von Abwasser dargestellt, welche zwei biologische Behandlungsstufen enthält, nämlich einen ersten aeroben Reaktor 12 und einen zweiten aeroben Reaktor 12'. Stromabwärts des ersten Reaktors 12 und stromaufwärts des zweiten Reaktors 12' ist eine Druckentspannungsflotationseinrichtung 26 angeordnet, welche mit dem ersten Reaktor 12 über die Leitung 62 und mit dem zweiten Reaktor 12' über die Leitung 62' verbunden ist. Zudem führt von der Druckentspannungsflotationseinrichtung 26 eine Teilstromrückführleitung 64 zu dem ersten Reaktor 12 zurück. Die Leitung 62 ist mit der Leitung 62' über eine Verbindungsleitung 66 verbunden, die über ein Ventil 68 vollständig geöffnet, teilweise geöffnet und geschlossen werden kann. Stromabwärts des zweiten Reaktors 12' ist eine Separationseinrichtung 70 vorgesehen, über die Schlamm aus dem gereinigten Wasser abgetrennt wird, der über die Schlammrückführleitung 72 in den ersten Reaktor 12 und/oder in den zweiten Reaktor 12' zurückgeführt wird. Bei dem ersten Reaktor 12 kann es sich auch um einen anaeroben Reaktor handeln, während der zweite Reaktor 12' zwingend ein aerober Reaktor ist.

Beim Betrieb der in der Fig. 6 dargestellten Anlage wird das der Anlage 60 über die Leitung 14 kontinuierlich zugeführte Abwasser in dem ersten aeroben Reaktor 12 gereinigt, bevor dieses in der Druckentspannungsflotationseinrichtung 26 enthärtet wird. Während ein Teilstrom des enthärteten Abwassers in den ersten Reaktor 12 zurückgeführt wird, wird der andere Teilstrom in den zweiten Reaktor 12' geleitet und weiter gereinigt. Über das Ventil 68 kann auch ein Teilstrom des den ersten Reaktor 12 verlassenden Wassers unter Umgehung der Druckentspannungsflotationseinrichtung 26 direkt in den zweiten Reaktor 12' geführt werden. Der in der Separationseinrichtung 70 abgetrennte Schlamm wird in den ersten Reaktor 12 und/oder in den zweiten Reaktor 12' zurückgeführt.

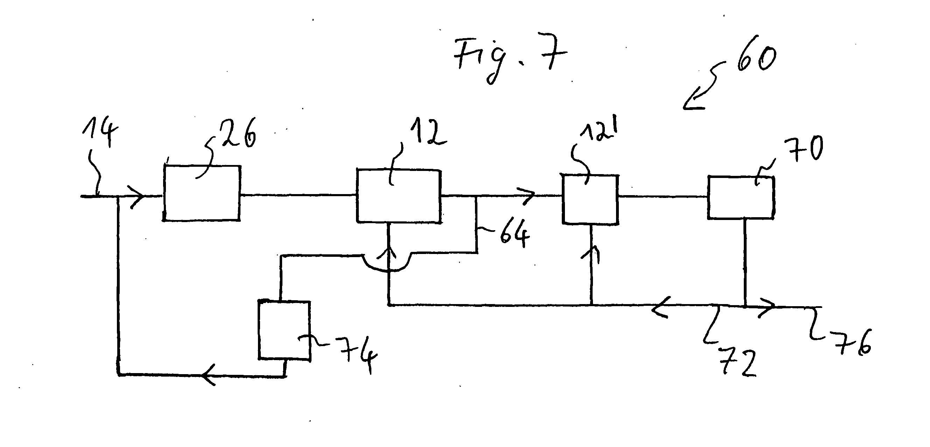

Die in der Fig. 7 dargestellte Anlage 60 zur Reinigung von Abwasser unterscheidet sich von der in Fig. 6 dargestellten dadurch, dass die Druckentspannungsflotationseinrichtung 26 stromaufwärts des ersten aeroben Reaktors 12 angeordnet ist. Während ein Teilstrom des aus dem ersten Reaktor 12 abgezogenen Wassers über die Teilstromrückführleitung 64 in die Druckentspannungsflotationseinrichtung 26 zurückgeführt wird, wird der andere Teilstrom in den zweiten aeroben Reaktor 12' geleitet. Der in der stromabwärts des zweiten Reaktors 12' angeordneten Separationseinrichtung 70 abgetrennte Schlamm wird vollständig oder teilweise in den ersten Reaktor 12 und/oder in den zweiten Reaktor 12' zurückgeführt, wohingegen etwaiger Überschussschlamm über die Abfuhrleitung 76 aus der Vorrichtung 60 abgezogen wird. In der Teilstromrückführleitung 64 ist ein Luftsättigungsbehälter 74 vorgesehen.

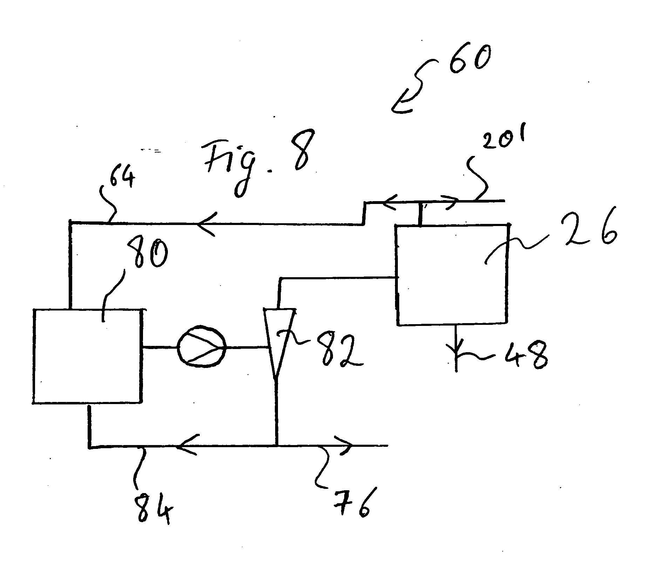

In der Fig. 8 ist eine Anlage 60 zur Reinigung von Abwasser gemäß eines weiteren Ausführungsbeispiels dargestellt, die als aeroben Reaktor ein aerobes, durchmischtes Becken 80 aufweist, dem ein Hydrozyklon 82 oder eine Batterie von Hydrozyklonen (nicht dargestellt) zur Abtrennung von Schlamm nachgeschaltet ist. Im Unterschied zu einem MBBR weist ein durchmischtes Becken in dem abgezogenen Wasser einen erheblichen Anteil an Schlamm auf, der in dem Hydrozyklon 82 vorab zum Großteil abgetrennt wird. Anstelle des Hydrozyklon 82 kann auch eine andere kompakte Phasenseparationseinheit (nicht dargestellt) zur Vorabschlammseparation verwendet werden. Von dem Hydrozyklon 82 führt eine Schlammrückführleitung 84 in das durchmischte Becken, wohingegen über die Überschussschlammabführleitung 76 Überschussschlamm abgezogen wird und das in dem Hydrozyklon 82 abgetrennte Wasser in eine Druckentspannungsflotationseinrichtung 26 geführt wird. Ein Teil des in der Druckentspannungsflotationseinrichtung 26 enthärteten Wassers wird über die Teilstromrückfuhrleitung 64 in das durchmischte Becken 80 zurückgeführt, wohingegen der andere Teilstrom über die Abfuhrleitung 20' aus der Vorrichtung 60 abgezogen wird.

### Bezugszeichenliste

- 10: Vorrichtung zur Abwasserreinigung
- 12, 12': aerober Reaktor
- 14: Abwasserzufuhrleitung
- 16: Gaszufuhrleitung
- 18: Belüftungseinrichtung
- 20, 20': Abwasserabfuhrleitung
- 22: Rezirkulationsleitung
- 24: Grobfilter
- 26: Druckentspannungsflotationseinrichtung
- 28: pH-Wert-Einstelleinrichtung
- 30, 30', 30": Zulaufleitung
- 31, 31': Zulaufleitung
- 32: Teilstromleitung
- 34: Druckentspannungsflotationsreaktor
- 36, 36': (Kreislauf)leitung
- 38: Zumischeinheit
- 40: Gaslösungsreaktor
- 42: Druckgaszufuhrleitung
- 43: Mischeinheit
- 44: Rückfuhrleitung in den aeroben Reaktor
- 46, 46': Druckentspannungsflotationszufuhrleitung
- 47, 47': Pumpe
- 48: Kalkabfuhrleitung
- 49: Ventil
- 50: Wasserabfuhrleitung
- 60: Anlage zur Abwasserreinigung
- 62, 62': Leitung
- 64: Teilstromrückführleitung
- 66: Verbindungsleitung
- 68, 68': Ventil
- 70: Separationseinrichtung
- 72: Schlammrückführleitung
- 74: Luftsättigungsreaktor
- 76: Überschussschlammabführleitung
- 80: durchmischtes Becken
- 82: (Hydro)zyklon
- 84: Schlammrückführleitung

## Patentansprüche

1. Verfahren zur kontinuierlichen Reinigung von Abwasser, insbesondere zur kontinuierlichen Reinigung von Abwasser in der Papierindustrie, bei dem einem aeroben Reaktor (12) Sauerstoff oder ein sauerstoffhaltiges Gas und zu reinigendes Abwasser zugeführt wird, das Abwasser in dem aeroben Reaktor (12) mit aeroben Mikroorganismen kontaktiert wird, um in dem Abwasser enthaltene Verunreinigungen abzubauen, und das gereinigte Abwasser aus dem aeroben Reaktor (12) abgeführt wird,
**dadurch gekennzeichnet, dass**
wenigstens ein Teil des Abwassers zwecks wenigstens teilweiser Enthärtung vor der Zuführung in den aeroben Reaktor (12) einem Druckentspannungsflotationsschritt unterzogen wird, wobei das zu reinigende Abwasser vor der Zuführung in den aeroben Reaktor (12) kontinuierlich einer Druckentspannungsflotationseinrichtung (26), in welcher der Druckentspannungsflotationsschritt durchgeführt wird, zugeführt und dort mit wenigstens einem Teil des kontinuierlich aus dem aeroben Reaktor (12) abgeführten Abwassers vermischt wird und aus der Druckentspannungsflotationseinrichtung (26) kontinuierlich wenigstens teilweise enthärtetes Abwasser abgeführt und direkt dem aeroben Reaktor (12) zugeführt wird, wobei die Wasserhärte in dem Druckentspannungsflotationsschritt wenigstens um 40 % verringert wird, und wobei die Vorrichtung, in welcher das Verfahren durchgeführt wird, eine Schlammseparationseinrichtung (70) umfasst, welche dem aeroben Reaktor (12) nachgeschaltet ist und von der eine Schlammrückführleitung (72) zu dem aeroben Reaktor (12) führt.

2. Verfahren nach Anspruch 1,
**dadurch gekennzeichnet,dass**
das Abwasser in dein Druckentspannungsflotationsschritt auf einen neutralen oder alkalischen pH-Wert eingestellt, mit Gas versetzt und mit Druck beaufschlagt wird, bevor das so behandelte Abwasser einem verringertem Druck ausgesetzt wird.

3. Verfahren nach Anspruch 2,
**dadurch gekennzeichnet, dass**
das Abwasser in dem Druckentspannungsflotationsschritt auf einen pH-Wert zwischen 7 und 10, bevorzugt zwischen 7 und 9 und besonders bevorzugt zwischen 7,5 und 8,5 eingestellt wird.

4. Verfahren nach einem der vorhergehenden Ansprüche,
**dadurch gekennzeichnet, dass**
dem Abwasser vor oder während dem Druckentspannungsflotationsschritt wenigstens ein Fällungsmittel und/oder wenigstens ein Flockungshilfsmittel zugesetzt wird, wobei das wenigstens eine Fällungsmittel vorzugsweise Polyaluminiumchlorid ist und das wenigstens eine Flockungshilfsmittel vorzugsweise Polyacrylamid ist.

5. Verfahren nach einem der vorhergehenden Ansprüche,
**dadurch gekennzeichnet, dass**
bei diesem die Temperatur des Abwassers, insbesondere die des dem aeroben Reaktor (12) zugeführten Abwassers, geregelt und/oder überwacht wird.

6. Verfahren nach einem der vorhergehenden Ansprüche,
**dadurch gekennzeichnet, dass**
das zu reinigende Abwasser vor oder nach der Behandlung in dem aeroben Reaktor (12) in einem oder mehreren weiteren aeroben und/oder anaeroben Reaktor(en) behandelt wird, wobei die Gesamtzahl der aeroben und ggf. anaeroben Reaktoren vorzugsweise 2 bis 6 beträgt.

7. Vorrichtung zur kontinuierlichen Reinigung von Abwasser, insbesondere zur kontinuierlichen Reinigung von Abwasser in der Papierindustrie nach einem der Ansprüche 1 bis 6, umfassend wenigstens einen Reaktor (12) zur aeroben Reinigung von Abwasser mit wenigstens einer Zufuhrleitung (14) zur Zuführung von zu reinigendem Abwasser in den Reaktor (12), wenigstens einer Gaszufuhrleitung (16) zur Zuführung von Sauerstoff oder zur Zuführung eines sauerstoffhaltigen Gases in den Reaktor (12) sowie wenigstens einer Abfuhrleitung (20) zur Abführung von gereinigtem Abwasser aus dem Reaktor (12),
**dadurch gekennzeichnet, dass**
die Vorrichtung (10) desweiteren eine, einen Druckentspannungsflotationsreaktor (34) aufweisende Druckentspannungsflotationseinrichtung (26) umfasst, welche mit der wenigstens einen Abfuhrleitung (20) des aeroben Reaktors (12) über eine Druckentspannungsflotationszufuhrleitung (46') derart verbunden ist, dass wenigstens ein Teilstrom des aus dem aeroben Reaktor (12) über die Abfuhrleitung (20) abgezogenen gereinigten Abwassers in den Druckentspannungsflotationsreaktor (34) geleitet werden kann, wobei die Druckentspannungsflotationseinrichtung (26) stromaufwärts des aeroben Reaktors (12) angeordnet ist, die Druckentspannungsflotationseinrichtung (26) wenigstens eine Zufuhrleitung (30, 31) für ein pH-Einstellmittel aufweist und die Druckentspannungsflotationseinrichtung (26) ferner eine von dem Druckentspannungsflotationsreaktor (34) direkt zu dem aeroben Reaktor (12) führende Leitung (44) umfasst, und wobei die Vorrichtung (10) eine Schlammseparationseinrichtung (70) umfasst, die dem aeroben Reaktor (12) nachgeschaltet ist, und von der eine Schlammrückführleitung (72) zu dem aeroben Reaktor (12) führt.

8. Vorrichtung nach Anspruch 7,
**dadurch gekennzeichnet, dass**
die Druckentspannungsflotationseinrichtung (26) wenigstens eine Zufuhrleitung (30', 30", 31') für ein Fällungsmittel und/oder ein Flockungshilfsmittel aufweist.

9. Vorrichtung nach einem der Ansprüche 7 oder 8,
**dadurch gekennzeichnet, dass**
die Druckentspannungsflotationseinrichtung (26) wenigstens eine Zufuhrleitung (42) für ein Druckgas aufweist.

10. Vorrichtung nach Anspruch 9,
**dadurch gekennzeichnet, dass**
die Druckentspannungsflotationseinrichtung (26) eine Gaslösungseinrichtung (40) aufweist, welche mit dem Druckentspannungsflotationsreaktor (34) über eine Leitung (36, 36') verbunden ist und in welche die Druckgaszufuhrleitung (42) mündet.

11. Vorrichtung nach Anspruch 10,
**dadurch gekennzeichnet, dass**
eine Abwasserzufuhrleitung (14) in eine Mischeinheit (43) mündet und von dort über eine Zufuhrleitung (46) in den Druckentspannungsflotationsreaktor (34) mündet, wobei die Mischeinheit (43) vorzugsweise eine Zufuhrleitung (31) für pH-Einstellmittel und/oder eine Zufuhrleitung (31') für Fällungs- und/oder Flockungshilfsmittel aufweist.

12. Vorrichtung nach einem der Ansprüche 7 bis 11,
**dadurch gekennzeichnet, dass**
die Leitung (44) der Druckentspannungsflotationseinrichtung (26) direkt in den Zulaufbereich des aeroben Reaktors (12) mündet.

13. Vorrichtung nach einem der Ansprüche 7 bis 12,
**dadurch gekennzeichnet, dass**
in dieser eine Temperatur-Einstelleinrichtung vorgesehen ist, welche vorzugsweise in der Leitung (44) angeordnet ist und welche vorzugsweise ein Wärmeaustauscher oder eine Kühleinrichtung, beispielsweise ein Kühlturm, ist.

14. Vorrichtung nach einem der Ansprüche 7 bis 13,
**dadurch gekennzeichnet, dass**
die Gaszufuhrleitung (16) des aeroben Reaktors (12) in eine Belüftungseinrichtung (18) mündet, welche vorzugsweise als eine Strahlbelüftung, als eine Volumenbelüftung oder als eine Oberflächenbelüftung ausgestaltet ist.

15. Vorrichtung nach einem der Ansprüche 7 bis 14,
**dadurch gekennzeichnet, dass**
die Vorrichtung (10) neben dem aeroben Reaktor (12) einen oder mehrere weitere aerobe Reaktoren (12') und/oder anaerobe Reaktoren umfasst.

## Claims

1. A method for the continuous purification of waste water, in particular for the continuous purification of waste water in the paper making industry, wherein oxygen or a gas containing oxygen and waste water to be purified are supplied to an aerobic reactor (12), the waste water is brought into contact with aerobic microorganisms in the aerobic reactor (12) to break down impurities contained in the waste water and the purified waste water is removed from the aerobic reactor (12),
**characterized in that**
at least some of the waste water is subjected to a dissolved air flotation step for the purpose of at least part softening before the supply into the aerobic reactor (12), with the waste water to be purified being continuously supplied before the supply into the aerobic reactor (12) to a dissolved air flotation device (26) in which the dissolved air flotation step is carried out and is there mixed with at least some of the waste water removed continuously from the aerobic reactor (12) and at least partly softened waste water is removed continuously from the dissolved air flotation device (26) and is supplied directly to the aerobic reactor (12), with the water hardness in the dissolved air flotation step being reduced by at least 40%, and with the apparatus in which the method is carried out including a sludge separation device (70) which is disposed downstream of the aerobic reactor (12) and from which a sludge return line (72) leads to the aerobic reactor (12).

2. A method in accordance with claim 1, **characterized in that** the waste water is set to a neutral or alkaline pH in the dissolved air flotation step, is dosed with gas and is pressurized before the waste water treated in this way is exposed to a reduced pressure.

3. A method in accordance with claim 2, **characterized in that** the waste water is set in the dissolved air flotation step to a pH between 7 and 10, preferably between 7 and 9 and particularly preferably between 7.5 and 8.5.

4. A method in accordance with any one of the preceding claims, **characterized in that** at least one precipitant and/or at least one flocculation aid is added to the waste water before or during the dissolved air flotation step, wherein the at least one precipitant is preferably polyaluminum chloride and the at least one flocculation aid is preferably polyacrylamide.

5. A method in accordance with any one of the preceding claims, **characterized in that** the temperature of the waste water in it, in particular that of the waste water supplied to the aerobic reactor (12) is regulated and/or monitored.

6. A method in accordance with any one of the preceding claims, **characterized in that** the waste water to be purified is treated before or after the treatment in the aerobic reactor (12) in one or more further aerobic and/or anaerobic reactors, with the total number of the aerobic and, optionally, anaerobic reactors preferably amounting to 2 to 6.

7. An apparatus for the continuous purification of waste water, in particular for the continuous purification of waste water in the paper making industry, in accordance with any one of the claims 1 to 6, comprising at least one reactor (12) for the aerobic purification of waste water having at least one supply line (14) for the supply of waste water to be purified into the reactor (12), at least one gas supply line (16) for the supply of oxygen or for the supply of a gas containing oxygen into the reactor (12) as well as at least one removal line (20) for the removal of purified waste water from the reactor (12),
**characterized in that**
the apparatus (10) furthermore includes a dissolved air flotation device (26) which has a dissolved air flotation reactor (34) and which is connected to the at least one removal line (20) of the aerobic reactor (12) via a dissolved air flotation supply line (46') such that at least a part flow of the purified waste water removed from the aerobic reactor (12) via the removal line (20) can be directed into the dissolved air flotation reactor (34), with the dissolved air flotation device (26) being arranged upstream of the aerobic reactors (12), the dissolved air flotation device (26) having at least one supply line (30, 31) for a pH setting agent and the dissolved air flotation device (26) furthermore including a line (44) leading from the dissolved air flotation reactor (34) directly to the aerobic reactor (12), and with the apparatus (10) including a sludge separation device (70) which is disposed downstream of the aerobic reactor (12) and from which a sludge return line (72) leads to the aerobic reactor (12).

8. An apparatus in accordance with claim 7, **characterized in that** the dissolved air flotation device (26) has at least one supply line (30', 30", 31') for a precipitant and/or a flocculation aid.

9. An apparatus in accordance with one of the claims 7 or 8, **characterized in that** the dissolved air flotation device (26) has at least one supply line (42) for a pressurized gas.

10. An apparatus in accordance with claim 9, **characterized in that** the dissolved air flotation device (26) has a gas dissolving device (40) which is connected to the dissolved air flotation reactor (34) via a line (36, 36') and into which the pressurized gas line (42) opens.

11. An apparatus in accordance with claim 10, **characterized in that** a waste water supply line (14) opens into a mixer unit (43) and opens from there via a supply line (46) into the dissolved air flotation reactor (34), with the mixer unit (43) preferably having a supply line (31) for pH setting agents and/or a supply line (31') for precipitants and/or flocculation aids.

12. An apparatus in accordance with any one of the claims 7 to 11, **characterized in that** the line (44) of the dissolved air flotation device (26) opens directly into the inflow region of the aerobic reactor (12).

13. An apparatus in accordance with any one of the claims 7 to 12, **characterized in that** a temperature setting device is provided in it which is preferably arranged in the line (44) and which is preferably a heat exchanger or a cooling device, for example a cooling tower.

14. An apparatus in accordance with any one of the claims 7 to 13, **characterized in that** the gas supply line (16) of the aerobic reactor (12) opens into an aeration device (18) which is preferably made as a jet aeration, as a volume aeration or as a surface aeration

15. An apparatus in accordance with any one of the claims 7 to 14, **characterized in that** the apparatus (10) includes one or more further aerobic reactors (12') and/or anaerobic reactors in addition to the aerobic reactor (12).

## Revendications

1. Procédé pour la purification continue d'eaux usées, en particulier pour la purification continue d'eaux usées dans l'industrie du papier, dans lequel on admet de l'oxygène ou un gaz contenant de l'oxygène ainsi que des eaux usées à purifier dans un réacteur aérobie (12), les eaux usées sont mises en contact dans le réacteur aérobie (12) avec des micro-organismes aérobies, pour dégrader les impuretés contenues dans les eaux usées, et les eaux usées purifiées sont évacuées hors du réacteur aérobie (12),
**caractérisé en ce que**
au moins une partie des eaux usées est soumise, dans le but d'un adoucissement au moins partiel, à une étape de flottation et de détente de pression avant l'admission dans le réacteur aérobie (12) de sorte qu'avant leur admission dans le réacteur aérobie (12) les eaux usées à purifier sont admises en continu dans un dispositif de flottation et de détente de pression (26) dans lequel est exécutée l'étape de flottation et de détente de pression, et sont mélangées dans celui-ci avec au moins une partie des eaux usées évacuées en continu hors du réacteur aérobie (12), et des eaux usées au moins partiellement adoucies sont évacuées en continu hors du dispositif de flottation et de détente de pression (26) et sont admises directement au réacteur aérobie (12), de sorte que la dureté de l'eau est réduite d'au moins 40 % dans l'étape de flottation et de détente de pression, et dans lequel le dispositif dans lequel est exécuté le procédé comprend un moyen de séparation de boues (70), situé en aval du réacteur aérobie (12) et duquel une conduite de retour de boues (72) mène au réacteur aérobie (12).

2. Procédé selon la revendication 1,
**caractérisé en ce que** les eaux usées sont établies dans l'étape de flottation et de détente de pression à une valeur de pH neutre ou alcalin, mélangées avec du gaz et soumises à une pression, avant que les eaux usées ainsi traitées soient exposées à une pression réduite.

3. Procédé selon la revendication 2,
**caractérisé en ce que** les eaux usées sont établies dans l'étape de flottation et de détente de pression à une valeur de pH entre 7 et 10, de préférence entre 7 et 9, et de façon particulièrement préférée entre 7,5 et 8,5.

4. Procédé selon l'une des revendications précédentes,
**caractérisé en ce que**
au moins un agent de précipitation et/ou au moins un auxiliaire de floculation est ajouté aux eaux usées avant ou pendant l'étape de flottation et de détente de pression, et ledit au moins un agent de précipitation est de préférence du polyaluminiumchlorure et ledit au moins un auxiliaire de floculation est de préférence du polyacrylamide.

5. Procédé selon l'une des revendications précédentes,
**caractérisé en ce que** dans celui-ci la température des eaux usées, en particulier celle des eaux usées admises au réacteur aérobie (12), est régulée et/ou surveillée.

6. Procédé selon l'une des revendications précédentes,
**caractérisé en ce que**, avant ou après le traitement dans le réacteur aérobie (12), les eaux usées à purifier sont traitées dans un ou plusieurs autres réacteur(s) aérobie(s) et/ou anaérobie(s), et le nombre total des réacteurs aérobies et le cas échéant anaérobies s'élève de préférence de 2 à 6.

7. Dispositif pour la purification continue d'eaux usées, en particulier pour la purification continue d'eaux usées et dans l'industrie du papier selon l'une des revendications 1 à 6, comprenant au moins un réacteur (12) pour la purification aérobie des eaux usées, qui comprend au moins une conduite d'admission (14) pour l'admission d'eaux usées à purifier dans le réacteur (12), au moins une conduite d'admission de gaz (16) pour l'admission d'oxygène ou pour l'admission d'un gaz contenant de l'oxygène dans le réacteur (12), ainsi qu'au moins une conduite d'évacuation (20) pour l'évacuation des eaux usées purifiées hors du réacteur (12),
**caractérisé en ce que**
le dispositif comprend en outre un moyen de flottation et de détente de pression (26) qui comprend un réacteur de flottation et de détente de pression (34), qui est relié avec ladite au moins une conduite d'évacuation (20) du réacteur aérobie (12) via une conduite d'admission de flottation et de détente de pression (46') de telle façon qu'au moins un courant partiel des eaux usées purifiées soutirées hors du réacteur aérobie (12) via la conduite d'évacuation (20) peut être mené jusque dans le réacteur de flottation et de détente de pression (34), et le moyen de flottation et de détente de pression (26) est agencé en amont du réacteur aérobie (12), le moyen de flottation et de détente de pression (26) comprend au moins une conduite d'amenée (30, 31) pour un agent de réglage de pH, et le moyen de flottation et de détente de pression (26) comprend en outre une conduite (44) qui mène depuis le réacteur de flottation et de détente de pression (34) directement au réacteur aérobie (12), et le dispositif (10) comprend un moyen de séparation de boues (70) qui est placé en aval du réacteur aérobie (12), et duquel une conduite de retour de boues (72) mène vers le réacteur aérobie (12).

8. Dispositif selon la revendication 7,
**caractérisé en ce que** le moyen de flottation et de détente de pression (26) comprend au moins une conduite d'amenée (30', 30", 31') pour un agent de précipitation et/ou pour un auxiliaire de floculation.

9. Dispositif selon l'une des revendications 7 ou 8,
**caractérisé en ce que** le moyen de flottation et de détente de pression (26) comprend au moins une conduite d'amenée (42) pour un gaz sous pression.

10. Dispositif selon la revendication 9,
**caractérisé en ce que** le moyen de flottation et de détente de pression (26) comprend un moyen de dissolution de gaz (40), qui est relié au réacteur de flottation et de détente de pression (34) via une conduite (36, 36') et dans lequel débouche la conduite d'amenée de gaz sous pression (42).

11. Dispositif selon la revendication 10,
**caractérisé en ce qu'**une conduite d'amenée d'eaux usées (14) débouche dans une unité de mélange (43) et depuis celle-ci débouche via une conduite d'amenée (46) dans le réacteur de flottation et de détente de pression (34), ladite unité de mélange (43) comprenant de préférence une conduite d'amenée (31) pour un agent de réglage de pH et/ou une conduite d'amenée (31') pour un agent de précipitation et/ou pour un auxiliaire de floculation.

12. Dispositif selon l'une des revendications 7 à 11,
**caractérisé en ce que** la conduite (44) du moyen de flottation et de détente de pression (26) débouche directement dans la région d'admission du réacteur aérobie (12).

13. Dispositif selon l'une des revendications 7 à 12,
**caractérisé en ce qu'**il est prévu dans celui-ci un dispositif de réglage de température qui est de préférence agencé dans la conduite (44) et qui est de préférence à un échangeur de chaleur ou un dispositif de refroidissement, par exemple une tour de refroidissement.

14. Dispositif selon l'une des revendications 7 à 13,
**caractérisé en ce que** la conduite d'amenée de gaz (16) du réacteur aérobie (12) débouche dans un dispositif d'aération (18), lequel est de préférence conçu comme une aération par et, comme une aération en volume ou comme une aération en surface.

15. Dispositif selon l'une des revendications 7 à 14,
**caractérisé en ce que** le dispositif (10) comprend, outre le réacteur aérobie (12), un ou plusieurs autres réacteurs aérobies (12') et/ou réacteurs anaérobies.
